# DEMANDE DE BREVET EUROPEEN

(11) **EP 2 088 540 A1**
(43) Date de publication de la demande: **12.08.2009**
(21) Numéro de dépôt: 08290104.2
(22) Date de dépôt: 06.02.2008
(51) Int. Cl.: G06K 19/07

(54) **Objet portable à dispositif d'auto-commutation**

(71) Demandeur: Gemalto SA, 92190 Meudon (FR)
(72) Inventeur: Capomaggio, Grégory, 92197 Meudon Cedex (FR); Caruana, Jean-Paul, 92197 Meudon Cedex (FR)
(74) Mandataire: Cour, Pierre

(57) **Abrégé**

Un dispositif électronique portable 1 comporte une batterie 14 couplée à un circuit électronique 10-12 par l'intermédiaire d'un circuit interrupteur 15 permettant de fournir ou non une tension d'alimentation Vcc au circuit électronique à l'aide de la batterie. Le dispositif portable comporte au moins un circuit de détection de champ électromagnétique 13 couplé au circuit interrupteur 15 pour amorcer l'alimentation du circuit électronique 10-12 en cas de détection d'un champ électromagnétique.

## Description

L'invention se rapporte à un objet portable disposant d'un dispositif d'auto-commutation. Plus particulièrement, le dispositif d'auto-commutation sert à mettre le dispositif sous tension à un instant donné sans intervention humaine.

Les objets portables désignés ainsi dans ce document comprennent au moins un circuit électronique et une batterie pour alimenter ledit circuit. Comme tout dispositif fonctionnant sur batterie, l'autonomie dépend de la consommation du dispositif et de la capacité de charge de la batterie. Généralement, la capacité de charge d'une batterie est proportionnelle à sa taille. Lorsqu'un objet est petit tout en ayant une consommation importante en fonctionnement, il est impératif de couper l'alimentation dès que possible et de reconnecter l'alimentation du dispositif lors de chaque utilisation. A cet effet, il est courant d'avoir recours à un interrupteur ou à un bouton poussoir actionné par l'utilisateur chaque fois que l'on souhaite utiliser l'objet portable. L'alimentation peut ensuite être coupée de manière automatique dès que l'objet n'est plus utilisé.

Pour certaines utilisations, il peut être souhaité qu'aucune intervention humaine ne soit utiliser. Il convient alors d'avoir un dispositif en fonctionnement permanent avec un mode de veille dont la consommation est plus réduite. Cependant un mode de veille peut parfois être très consommateur au vu de la batterie. A titre d'exemple, si on considère un badge d'accès pour une entreprise qui communique avec un protocole de communication radiofréquence de type WiFi, Bluetooth, Hiperlan ou autre, le mode de veille pour repérer une communication nécessite la mise sous tension d'un amplificateur d'entrée relativement consommateur d'énergie. Bien que la mise en veille permette d'économiser la consommation de l'appareil, cela n'est pas suffisant pour une batterie de très faible capacité telle que l'on peut en trouver dans un badge de la taille d'une carte de crédit. Il convient donc de trouver une solution pour diminuer encore la consommation de tels dispositifs.

Par ailleurs, il est connu d'avoir recours à des transpondeurs autoalimenté par un champ magnétique servant en outre à communiquer. Il est connu d'avoir recours à de tels procédés pour des étiquettes électroniques également connues sous le nom de « Tag RFID », par exemple pour identifier des produits dans un chariot ou faire du comptage d'objet ou d'animal. Ce type de communication peut également être utilisé pour des applications relativement complexe pouvant inclure du paiement ou encore des passeports électroniques. Différentes normes existent pour définir les objets utilisant ce type de communication, parmi lesquelles la norme ISO/IEC 14443. Ces différentes normes sont regroupées sous l'acronyme NFC (de l'anglais Near Field Communication). Les principaux inconvénients des dispositifs de type NFC sont, d'une part, le bas débit des transferts de données et, d'autre part, la distance limitée de communication et d'alimentation du dispositif. En effet, il est nécessaire que le dispositif reste dans le champ électromagnétique tant que l'on souhaite l'utiliser. Ce n'est pas adapté pour des utilisations ou le badge peut être amené à passer rapidement dans un champ tout en ayant une communication importante à réaliser.

L'invention propose un dispositif à batterie dont l'alimentation est déclenchée par détection d'un champ électromagnétique. L'alimentation peut-être complètement coupée tant qu'aucun champ n'est détecté.

Plus particulièrement, l'invention se rapporte à un dispositif électronique portable comportant une batterie couplée à un circuit électronique par l'intermédiaire d'un circuit interrupteur permettant de fournir ou non une tension d'alimentation au circuit électronique à l'aide de la batterie. L'objet portable comporte au moins un circuit de détection de champ électromagnétique couplé au circuit interrupteur pour amorcer l'alimentation du circuit électronique en cas de détection d'un champ électromagnétique.

De manière préférentielle, le circuit de détection de champ électromagnétique peut être autoalimenté par le champ électromagnétique. Le circuit de détection de champ magnétique peut alimenter le circuit interrupteur pendant au moins une phase d'amorçage d'alimentation. Le circuit de détection de champ peut comporter un circuit résonnant et un circuit de redressement et de régulation. Le circuit résonnant est associé à une plage de fréquence afin qu'une une tension alternative se crée à ses bornes en présence d'un champ électromagnétique dont la fréquence est comprise dans la plage de fréquence. Le circuit de redressement et de régulation transforme la tension alternative en tension continue.

Selon des variantes de réalisation, le circuit interrupteur peut disposer d'un bouton poussoir pour amorcer l'alimentation du circuit électronique à partir de la batterie. Le circuit interrupteur peut comporter une entrée reliée au circuit électronique pour déclencher la coupure d'alimentation dudit circuit électronique. Le circuit interrupteur peut être un relais électronique. Le circuit interrupteur peut comporter un transistor et une bascule. Le transistor sert à établir ou couper la tension d'alimentation du circuit électronique. La bascule est de type bistable pour commander le transistor, ladite bascule étant alimentée de manière auto-sélective par la batterie et par le circuit de détection de champ électromagnétique.

L'invention sera mieux comprise, et d'autres particularités et avantages apparaîtront à la lecture de la description qui va suivre, la description faisant référence aux dessins annexés, parmi lesquels :
la figure 1 représente un dispositif selon l'invention dans un environnement de fonctionnement,
la figure 2 représente un exemple de réalisation d'un dispositif selon l'invention, et
la figure 3 détaille la partie du dispositif relatif au circuit interrupteur de l'invention.

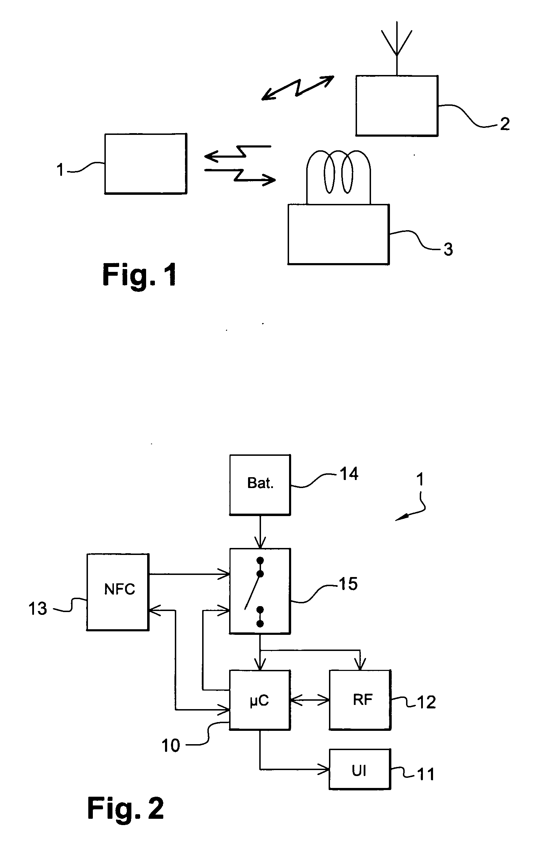

La figure 1 représente un dispositif électronique portable 1 dans son environnement d'utilisation. Le dispositif portable 1 est par exemple un badge destiné à communiquer par radio fréquence avec une station de base 2. A titre d'exemple, le badge est destiné à une personne mobile à l'intérieur d'une entreprise et à laquelle on souhaite communiquer des informations sur des tâches à exécuter. L'entreprise dispose en outre de bornes 3 de contrôle d'accès permettant d'enregistrer des passages de personne. Le temps du contrôle est très bref et ne permet pas d'échanger plus qu'un identifiant pour contrôler que la personne est autorisée ou non. Les bornes 3 peuvent également être utilisées pour un autre usage indépendant des badges 1, l'important étant que les bornes 3 émettent un champ électromagnétique suffisant pour être détecté, et par exemple conforme à une norme de type NFC, par exemple ISO/IEC 14443.

Un exemple de réalisation fonctionnelle du badge 1 est montré sur la figure 2. A titre d'exemple, le badge 1 peut comporter un microcontrôleur 10, une interface utilisateur 11, une interface radiofréquence 12, une interface de communication de proximité 13, une batterie 14 et un circuit interrupteur 15. Le microcontrôleur 10 est typiquement constitué d'au moins un microprocesseur et d'au moins une mémoire qui mettent en oeuvre au moins un programme pour contrôler l'ensemble des éléments 11 à 14 constituants le badge 1.

L'interface utilisateur 11 permet au badge d'interagir avec un utilisateur. A titre d'exemple cette interface utilisateur peut par exemple comprendre un petit écran LCD, intégrable dans un badge au format « carte de crédit », un générateur de bip pour signaler qu'un message est arrivé, un lecteur d'empreinte digitale ou encore un mini clavier.

L'interface radio fréquence 12 est une interface de communication dont la portée est comprise entre quelques dizaines et quelques centaines de mètre. L'interface radio fréquence 12 est par exemple conforme à l'un des standards suivant : Bluetooth (IEEE 802.15.3), Zigbee (IEEE 802.15.4), WiFi (IEEE 802.11) ou autre...

L'interface de communication de proximité 13 est une interface qui peut être conforme à la norme ISO 14443. Toutefois, dans l'invention et comme détaillé par la suite, cette interface peut être limitée à la partie concernant la récupération d'énergie.

La batterie 14 est une batterie de faible dimension, donc de faible capacité. Le circuit interrupteur 15 permet de connecter ou non la batterie aux éléments du badge 1 à l'exception de l'interface NFC 13 qui dispose de son alimentation propre.

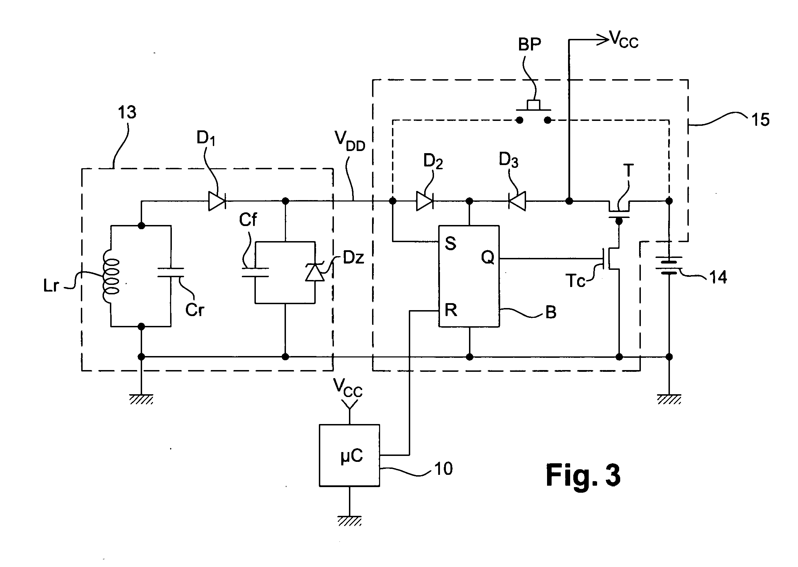

La figure 3 détaille plus particulièrement la partie concernant l'alimentation du badge 1. L'interface NFC 13 est ici réduite à sa partie concernant la récupération d'alimentation. Pour l'invention, il n'est pas nécessaire d'avoir un circuit de modulation/démodulation du champ électromagnétique. L'interface NFC 13 comporte un circuit résonant constitué d'une inductance Lr et d'une capacité Cr accordés, par exemple, sur une fréquence de 13,56 MHz correspondant à des bornes de contrôle d'accès. Le circuit résonant est couplé à une diode D₁ qui a pour fonction de redresser le signal. Un condensateur Cf assure ensuite le filtrage du signal fournit par la diode D₁. Une diode Zener Dz en parallèle sur le condensateur Cf régule la tension redressée et filtrée afin que celle-ci soit dans une plage de fréquence compatible avec l'alimentation d'un circuit intégré. Ce type d'interface NFC 13 est bien connu de l'homme du métier et différentes variantes sont possibles.

Le circuit interrupteur 15 correspond à un relais électronique. Un transistor T permet de relier par l'intermédiaire de son canal la borne positive de la batterie 14 à une sortie d'alimentation du circuit interrupteur 15 pour fournir la tension d'alimentation Vcc aux autres éléments du badge 1. Une bascule bistable B de type SR (de l'anglais Set-Reset) est reliée à la grille du transistor T pour commander sa conduction ou sa non-conduction par l'intermédiaire d'un transistor de commande Tc. La bascule bistable est alimentée à la fois par l'interface NFC et par la tension d'alimentation Vcc par l'intermédiaire de deux diodes D₂ et D₃. Ainsi, lorsque le canal du transistor T est ouvert, la bascule B doit être alimentée par la diode D2 et l'interface NFC pour fonctionner. Si le transistor T est fermé, alors la bascule B est alimentée par la diode D3 et la batterie 14. La bascule peut maintenir un état de sortie à 1, ce qui rend passant le transistor de commande Tc ainsi que le transistor T. Si jamais l'état de la sortie de la bascule passe à 0, le transistor de commande Tc se bloque et le courant de fuite de la grille du transistor va ramener celle-ci au même potentiel que son substrat, bloquant ainsi le transistor T. Le transistor T étant bloqué, la batterie 14 est déconnectée des autres éléments du badge 1.

Afin de commander la mise sous tension du badge, une entrée S de la bascule B est reliée au potentiel Vdd fourni par l'interface NFC 13. L'entrée S est une entrée de mise à un de la bascule B. Ainsi, dès que la tension Vdd atteint un niveau suffisant pour alimenter la bascule B, alors sa sortie est mise à un automatiquement. La commutation du transistor T maintient ce niveau à un lorsque la tension Vdd chute, notamment parce que le déplacement du badge fait que le niveau du champ électromagnétique devient trop faible pour fournir l'énergie suffisante à l'alimentation de la bascule B.

Afin de commander la mise hors tension du badge, une entrée R de la bascule B est reliée à une sortie du microcontrôleur 10. L'entrée R est une entrée de remise à zéro de la bascule B. Il convient de maintenir la sortie du microcontrôleur à zéro tant que l'on souhaite alimenter le badge. La mise à un peut être déclenchée par le microcontrôleur suite à un laps de temps prédéterminé d'inaction du badge, c'est à dire absence d'échange de message via l'interface RF 12 ou inaction sur l'interface utilisateur 1. La mise à un de l'entrée R provoque la mise à zéro de la sortie de la bascule B et donc le blocage du transistor de commande Tc et du transistor T, coupant ainsi l'alimentation de tous les éléments du badge 1.

Le circuit interrupteur 15 se comporte comme un relais électromécanique bistable qui positionnerait un interrupteur en position ouverte ou fermée en fonction de deux tensions de consigne. Toutefois, au vu des petites dimensions que peut avoir un badge au format carte de crédit, il est préférable d'avoir le circuit décrit qui est intégrable sur un circuit intégré.

De manière optionnelle, il est possible d'ajouter un bouton poussoir BP qui permette de relier la sortie de la batterie à l'entrée de tension provenant de l'interface NFC. Ainsi, il devient possible d'amorcer l'alimentation du badge en l'absence de champ électromagnétique en appuyant sur le bouton poussoir BP. La pression ainsi exercée revient à simuler le passage du badge dans un champ électromagnétique.

De nombreuses variantes du circuit interrupteur 15 sont possibles. Le principal intérêt du circuit interrupteur 15 est de commuter la tension fournie par la batterie en fonction de deux signaux de commande dont l'un provient de la détection d'un champ électromagnétique. Cependant, l'homme du métier pourra remarquer que le circuit proposé n'est pas alimenté lorsque la batterie est coupée ce qui présente un avantage supplémentaire pour le mode de réalisation précédemment présenté.

## Revendications

1. Dispositif électronique portable (1) comportant une batterie (14) couplée à un circuit électronique (10-12) par l'intermédiaire d'un circuit interrupteur (15) permettant de fournir ou non une tension d'alimentation (Vcc) au circuit électronique à l'aide de la batterie, **caractérisé en ce qu'**il comporte au moins un circuit de détection de champ électromagnétique (13) couplé au circuit interrupteur (15) pour amorcer l'alimentation du circuit électronique (10-12) en cas de détection d'un champ électromagnétique.

2. Dispositif selon la revendication 1 dans lequel le circuit de détection de champ électromagnétique (13) est autoalimenté par le champ électromagnétique.

3. Dispositif selon la revendication 2 dans lequel le circuit de détection de champ magnétique (13) alimente le circuit interrupteur (15) pendant au moins une phase d'amorçage d'alimentation.

4. Dispositif selon la revendication 2, dans lequel le circuit de détection de champ comporte :
- un circuit résonnant (Lr, Cr), associé à une plage de fréquence, aux bornes duquel une tension alternative se crée en présence d'un champ électromagnétique dont la fréquence est comprise dans la plage de fréquence,
- un circuit de redressement (D1) et de régulation (Cf, Dz) pour transformer la tension alternative en tension continue (Vdd).

5. Dispositif selon la revendication 1, dans lequel le circuit interrupteur (15) dispose d'un bouton poussoir (BP) pour amorcer l'alimentation du circuit électronique (10-12) à partir de la batterie (14).

6. Dispositif selon la revendication 1, dans lequel le circuit interrupteur (15) comporte une entrée (R) reliée au circuit électronique pour déclencher la coupure d'alimentation dudit circuit électronique (R).

7. Dispositif selon la revendication 1, dans lequel le circuit interrupteur (15) est un relais électronique.

8. Dispositif selon la revendication 1 dans lequel le circuit interrupteur comporte :
- un transistor (T) pour établir ou couper la tension d'alimentation (Vcc) du circuit électronique (10-12),
- une bascule (B) de type bistable pour commander le transistor (T), ladite bascule étant alimentée de manière auto-sélective par la batterie (14) et par le circuit (13) de détection de champ électromagnétique.
